# Europäisches Patentamt
# European Patent Office
# Office européen des brevets

(11) Publication number: **0 143 538**
**B1**

(12) **EUROPEAN PATENT SPECIFICATION**

(45) Date of publication of patent specification: **28.12.88**

(21) Application number: **84306917.0**

(22) Date of filing: **10.10.84**

(51) Int. Cl.⁴: **B 29 C 35/16** // B29K21:00, B29L30:00

(54) Post-inflator for tire vulcanizer.

(30) Priority: **31.10.83 JP 205444/83**

(43) Date of publication of application:
**05.06.85 Bulletin 85/23**

(45) Publication of the grant of the patent:
**28.12.88 Bulletin 88/52**

(84) Designated Contracting States:
**DE FR GB IT**

(56) References cited:
**DE-A-1 778 859**
**US-A-3 075 237**

(73) Proprietor: **Sarumaru, Kazumasa**
**8-27 Kinmitsu-cho**
**Ashiya (JP)**

(72) Inventor: **Sarumaru, Kazumasa**
**8-27 Kinmitsu-cho**
**Ashiya (JP)**

(74) Representative: **Hayward, Denis Edward Peter**
**et al**
**Lloyd Wise, Tregear & Co. Norman House**
**105-109 Strand**
**London WC2R 0AE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to a post-inflater for use with a tire vulcanizer, which is designed to cool the formed tires received from the vulcanizer, in accordance with the preamble of Claim 1.

In the operation of a tire vulcanizer, an unvulcanized tire is placed between the dies of the vulcanizer and heated while maintaining a high pressure within the tire. After vulcanization the tire is normally at a temperature of 150°C—170°C and it is then cooled to the ambient temperature. In the case of a tire containing certain kinds of chemical or man-made fibers, if the tire is left as it is while cooling, the cords shrink and cause distortions in the tire.

To avoid this distortion, a post-inflater is often used to supply the space within a hot vulcanized tire with pressurized air in order to tension the inside of the tire while cooling the tire, thereby preventing the cords from shrinking.

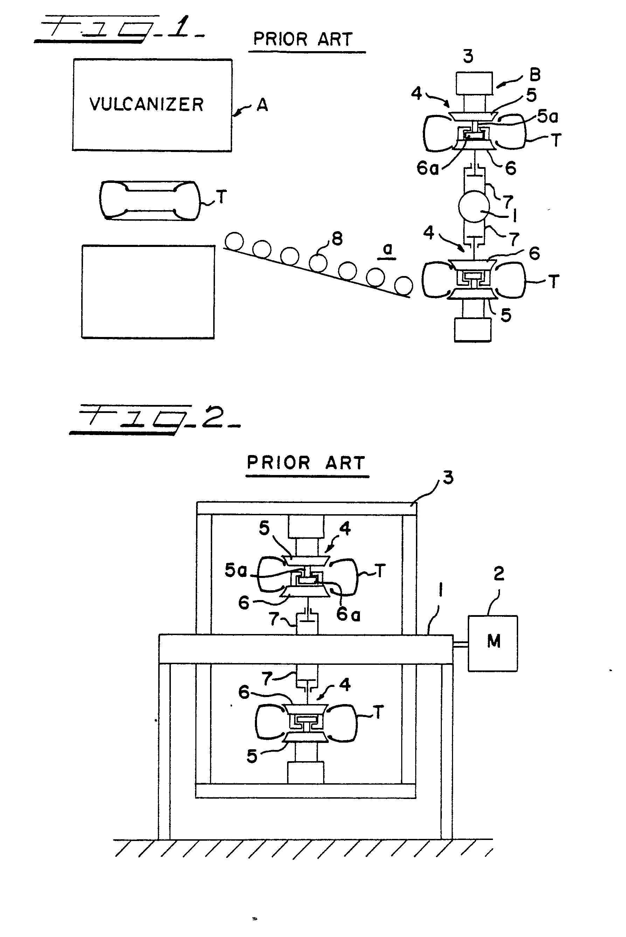

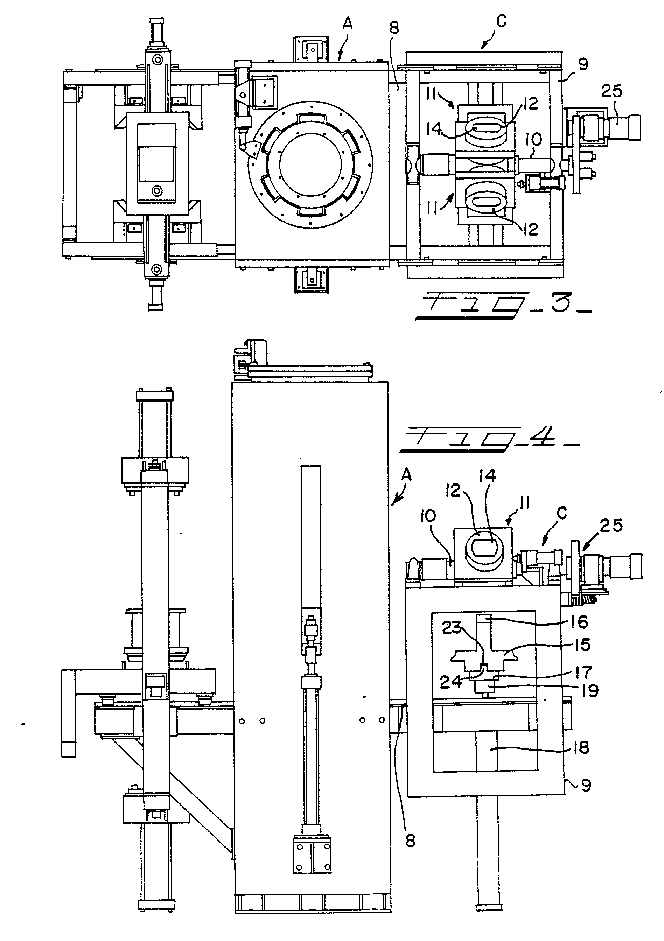

Figures 1 and 2 of the accompanying drawings show a conventional two-station post-inflater B, which is part of the prior art falling within the terms of Art. 54(2) EPC. This known post-inflator includes a horizontal rotatable shaft 1 extending perpendicularly to the direction of conveyance of tires T received from a vulcanizer A. A drive mechanism 2 is coupled to the shaft 1 for periodically rotating the shaft. A pair of frames 3 are fixed to the shaft 1, and a pair of tire holders 4 are provided around the shaft 1. Each holder 4 has an outer bead plate 5 rotatably mounted on one of the frames 3, and an inner bead plate 6 connected to a hydraulic cylinder 7, which is mounted on the shaft 1.

The inner plate 6 has a cavity 6a with a narrow mouth, and the outer plate 5 has a T-shaped lock member 5a. The cavity 6a and the lock 5a can engage together by rotating the outer plate 5 relative to the inner plate 6, in order to hold the plates 5 and 6 with a constant space therebetween.

In the operation of the apparatus, a vulcanised tire T from the vulcanizer A is conveyed on a conveyer 8, and it is placed on the lower holder 4 of the post-inflater B. The central openings at the beads of the tire are closed by the two bead plates 5 and 6 which are moved towards each other and interconnected by the member 5a in the cavity 6a. The space within the tire is then supplied with pressurised air. The tire is carried to the upper position of the post-inflater B by the rotation of the frame 3 and the shaft 1 and is cooled, while the next tire is conveyed from the vulcanizer and mounted on the lowermost holder.

The post-inflater described, for instance, in US—A—3075237 is similar in principle of operation to this, except that the common axis of the pairs of bead plates is inclined to the vertical and there are shown operating in unison two assemblies each comprising two pairs of bead plates.

If a post-inflater B of this character were constructed to have three or more cooling stations, the preceding tire, the holder 4 therefor, part of the frame 3, etc. would be in the way of the subsequent tires being conveyed from the vulcanizer A to the lowest holder 4. This would necessitate enlarging the radius of the frame 3 in order to provide for the passage of the tires. As a result, the conveyor 8 would also have to be lengthened.

A general object of the present invention is to provide a compact multi-station post-inflater.

According to the present invention there is provided a post-inflater for use with a tire vulcanizer and adapted to receive a series of heated vulcanized tires from the vulcanizer, said inflater comprising a substantially horizontal rotatable shaft and a plurality of tire holding units mounted on said shaft at angularly spaced locations, each of said units including a fixed bead plate which is fixed to said shaft and a movable bead plate, said movable and fixed plates being interengageable together and adapted to engage both beads of a tire to form a sealed space within the tire, said shafts being rotatable so that said tire holding units are successively located at a lowermost position, characterized in that said horizontal rotatable shaft is supported parallel to the direction of conveyance of tires from said vulcanizer, and a base which does not rotate with the shaft is supported below said shaft and said lowermost position and is vertically reciprocatable relatively to said shaft, said base being engageable with the movable bead plate of a tire holding unit when said unit is at said lowermost position to vertically move said movable bead plate toward and away from said fixed bead plate.

One embodiment of the invention will now be described by way of example and with reference to the accompanying drawings, wherein:

Fig. 1 is a schematic side view showing a conventional post-inflater and a tire vulcanizer;

Fig. 2 is a front view of the structure shown in Fig. 1;

Fig. 3 is a plan view showing a post-inflater according to this invention, in combination with a tire vulcanizer;

Fig. 4 is a side view of the structure shown in Fig. 3; and

Figs. 5a to 5e are schematic views showing the operation of the post-inflater in Figs. 3 and 4.

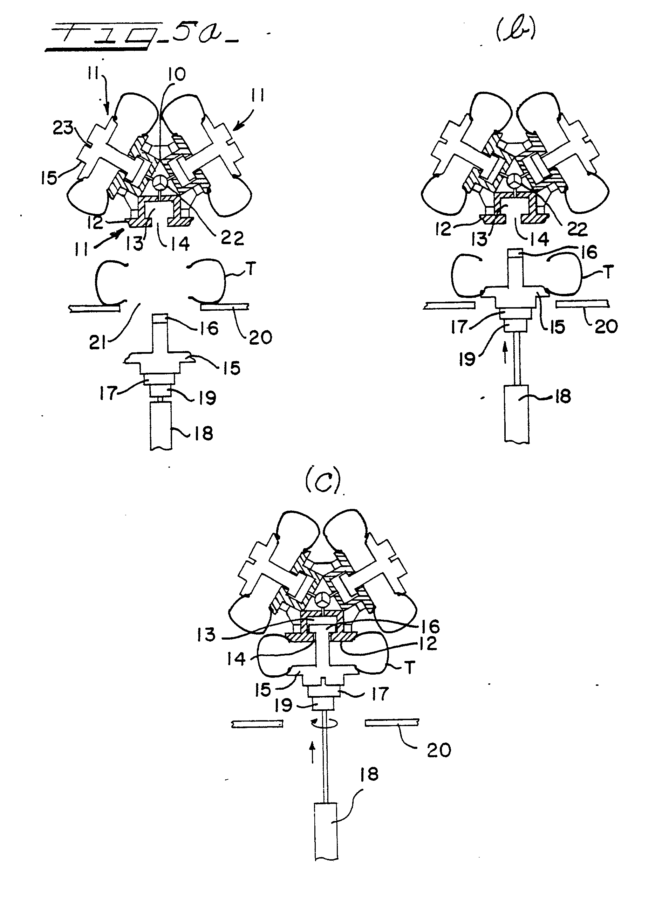

In Figs. 3—5, the post-inflater C according to this invention includes a horizontal rotatable shaft 10 supported by a frame 9, the shaft 10 being parallel to the direction of conveyance of tires on a conveyor 8 from a conventional vulcanizer A. The shaft 10 is coupled to be periodically rotated by a drive mechanism 25. Provided around the shaft 10 are three or more generally identical tire holding units 11, each including a fixed bead plate or disk 12 fixed to and rotatable with the shaft 10, and a movable bead plate or disk 15.

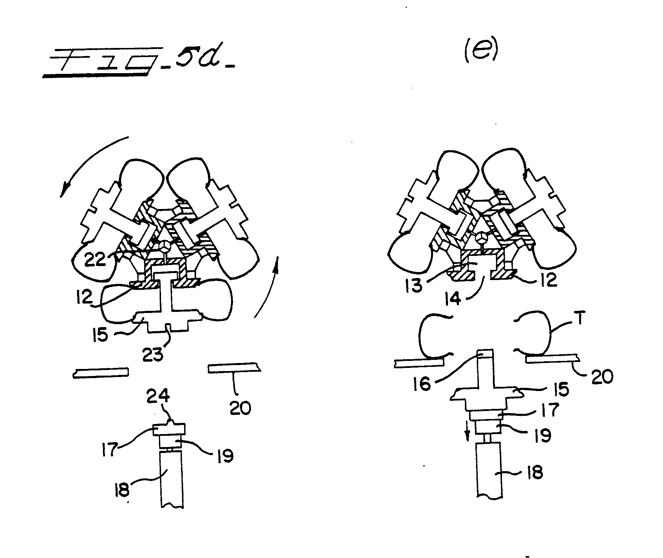

Each fixed bead plate 12 has a cavity 13 (Figs. 5a to 5e) with a narrow key-shaped opening 14 on its outer side. The shaft 10 has air passages 22 formed therein, one passage 22 communicating with each cavity 13.

Each movable bead plate 15 has a T-shaped locking projection 16 shaped to pass through the opening 14 and into one of the cavities 13. When the projection 13 is turned 90°, it engages to interior surface of the cavity wall and thereby locks the two plates 12 and 15 together. The plate 15 also has a groove 23 (Figs. 4 and 5d) on the opposite side to the projection 16.

Provided below the shaft 10 is a base 17 for moving the lowermost of the movable bead plates 15, the base 17 having a tooth 24 for engagement with the groove 23. The base 17 is coupled to a drive mechanism 19 for rotating the base 17 on a vertical axis that is coaxial with the lowermost bead plate 15. The mechanism 19 is connected to the upper end of the piston of a hydraulic cylinder 18 for vertical reciprocation of the base 17.

A tire unloader 20 (Figs. 5—5e) if fixed to the frame 9 between the shaft 10 and the cylinder 18, and spaced below the lowermost holder 11 sufficiently to receive a tire from the conveyor 8. The unloader 20 has a central hole 21 of a diameter larger than the outer diameter of the movable bead plates 15 but smaller than the outer diameter of the tires.

Of course, the bead plates 12 and 15 of the lowest holder, the unloader hole 21, the base 17, the drive mechanism 19 and the cylinder 18 are all coaxial.

The operation of the present apparatus is illustrated in Figs. 5a to 5e. The shaft 10 has, in the present example, three holders 11 mounted on it at angular spacings, although more than three could be provided. In Fig. 5a, one of the holders 11 is at the lowermost or loading position, with its movable bead plate 15 engaging with the base 17 which is at the lowest waiting position and below the unloader 20. A tire T received from the vulcanizer A rests on the unloader 20 and is centred with the plate 15.

In Fig. 5b, the hydraulic cylinder 18 is operated to move the movable bead plate 15 upwardly through the hole 21 of the unloader, and the plate 15 engages with the lower bead of the tire.

In Fig. 5c, the movable bead plate 15 is further lifted along with the tire by the cylinder 18, until the head of the projection 16 has passed through the opening 14 and entered the cavity 13 of the lowermost fixed bead plate 12, and the fixed plate 12 has engaged with the upper bead of the tire. As a result, the pair of bead plates 12 and 15 form seals with the beads of the tire. The drive mechanism 19 is then operated to rotate the movable bead plate 15 and the base 17 by 90 degrees relative to the bead plate 12, whereby the head of the projection 16 locks in the cavity 13. The tooth 24 of the base 17, of course, engages the groove 23 to cause the plate 15 to rotate with the base 17.

In Fig. 5d, the cylinder 18 is operated to lower the base 17 to the lower or waiting position where it is below the unloader 20 and away from the movable bead plate 15. The sealed space within the tire is supplied with pressurized air through one of the passages 22 in the shaft 10 by connecting this passage to a compressed air supply (not shown), in order to apply tension within the tire. The shaft 10 is then rotated 120° until the next following holder 11 which carries a cooled tire has turned to the lowermost or loading position.

In Fig. 5e, the cylinder 18 is again operated to lift the base 17 and cause it to engage the lowermost bead plate 15. In the reverse order to the preceding loading, the mechanism 19 rotates the plate 15 by 90° so that the pair of bead plates 12 and 15 on the now lowest holder 11 are disengaged from each other. Thereafter, as the hydraulic cylinder 18 retracts and the movable bead plate 15 is lowered, the cooled tire thereon is left on the unloader 20. The movable bead plate 15 is further lowered to the waiting position shown in Fig. 5a, and waits there for the next tire from the vulcanizer. The cooled tire on the unloader 20 is removed therefrom manually or by other suitable means. The foregoing cycle is then repeated when the next hot tire is received from the vulcanizer.

Thus, all preceding tires held by the holders 11 are out of the way of tires conveyed from the vulcanizer A. The present apparatus needs no frame for supporting the outer bead plates 15, which would correspond to the frame 3 in Figs. 1 and 2 and obstruct the conveyance of tires, and the single base 17 can deal with any number of movable bead plates 15. By having three or more tire holding units on the shaft 10, the tires are carried under pressure sufficiently long for them to cool. By a unit, it is meant a fixed bead plate 12 and the associated movable bead plate, and an air passage for conveying pressurized air to the interior space between the plates and a tire.

## Claims

1. A post-inflater for use with a tire vulcanizer and adapted to receive a series of heated vulcanised tires (T) from the vulcanizer (A), said inflater (C) comprising a substantially horizontal rotatable shaft (10), and a plurality of tire holding units (11) mounted on said shaft at angularly spaced locations, each of said units including a fixed bead plate (12) which is fixed to said shaft and a movable bead plate (15), said movable and fixed plates being interengageable together and adapted to engage both beads of a tire to form a sealed space within the tire, said shaft being rotatable so that said tire holding units are successively located at a lowermost position, characterised in that said horizontal rotatable shaft (10) is supported parallel to the direction of conveyance of tires from said vulcanizer, and a base (17) which does not rotate with the shaft is supported below said shaft and said lowermost position and is vertically reciprocatable relatively to said shaft, said base (17) being engageable with the movable bead plate (15) of a tire holding unit when said unit is at said lowermost position to vertically move said movable bead plate toward and away from said fixed bead plate (10).

2. A post-inflater according to Claim 1, and further including a tire unloader (20) mounted at a fixed location relative to said shaft, said unloader being spaced below said fixed plate of a tire holding unit at said lowermost position, said unloader being adapted to support a heated tire below said lowermost position.

3. A post-inflater according to Claim 1 or Claim 2, wherein said movable and fixed plates of each unit have locking means (13, 14, 16) thereon which are interengageable by rotating said movable plate, and said base includes means (19) for rotating said movable plate.

4. A post-inflater according to Claim 3, wherein said base is rotatable on a vertical axis with said movable plate, said locking means comprising a cavity (13) with a narrow opening (14) formed on said fixed plate, and a T-shaped projection (16) on said movable plate adapted to enter said cavity and engage with said cavity by said rotation of said movable plate.

5. A post-inflater according to Claim 4, wherein said movable plate has a groove (23) on the opposite side to said T-shaped projection, and said base has a tooth (24) for engagement with said groove.

6. A post-inflater as claimed in Claim 2 or any of Claims 3 to 5 when dependent on Claim 2, wherein said unloader has a hole (21) therein of a diameter larger than the outer diameter of said movable plate, but smaller than the outer diameter of a tire, said movable plate being movable through said hole and engageable with a tire.

## Patentansprüche

1. Nachaufblas-Vorrichtung für eine Reifen-Vulkanisiereinrichtung zur Aufnahme einer Reihne von erhitzten vulkanisierten Reifen (T) aus einer Vulkanisiereinrichtung (A), wobei die Aufblas-Vorrichtung (C) eine allgemein horizontale umflaufende Welle (10) und mehrere Reifenhalteeinheiten (11) aufweist, die auf der Welle in winkelabstandsgesetzten Stellen angeordnet sind und von denen eine jede eine ortsfeste mit der Welle fest verbundene Wulstplatte (12) sowie eine bewegliche Wulstplatte (15) besitzt, die beide in gegenseitigen Eingriff kommen können und in beide Wülste eines Reifens eingreifen, um einen abgedichteten Raum in Reifen zu bilden, und wobei die Welle drehbar ist, so daß die Reifenhalteeinheiten aufeinanderfolgend an einer untersten Stelle liegen, dadurch gekennzeichnet, daß die horizontale drehbare Welle (10) parallel zur Förderrichtung der Reifen aus der Vulkanisiereinrichtung gehalten wird, daß die Basis (17), die sich nicht mit der Welle dreht, unter der Welle und der untersten Stelle gehalten wird und gegenüber der Welle senkrecht hin- und herbeweglichen ist, und daß die Basis (17) mit der beweglichen Wulstplatte (15) einer Reifenhalteeinheit in Eingriff kommen kann, wenn sich die Einheit in ihrer untersten Stellung befindet, um die bewegliche Wulstplatte zur ortsfesten Wulstplatte (10) hin und von dieser weg zu bewegen.

2. Nachaufblas-Vorrichtung nach Anspruch 1, gekennzeichnet durch eine Reifenentladeeinrichtung (20), die an einer gegenüber der Welle ortsfesten Stelle angeordnet ist und in einem Abstand unter der ortsfesten Platte einer Reifenhalteeinrichtung an der untersten Stelle liegt und dabei so ausgebildet ist, daß sie einen erhitzten Reifen unter dieser untersten Stelle halten oder tragen kann.

3. Nachaufblas-Vorrichtung nach einem der vorhergehenden Ansprüche 1 oder 2, dadurch gekennzeichnet, daß die bewegliche und die ortsfeste Platte jeder Einheit über Verriegelungen (13, 14, 16) verfügen, die durch Drehen der beweglichen Platte miteinander in Eingriff kommen können, wobei die Basis eine Einrichtung (19) besitzt, um die bewegliche Platte zu drehen.

4. Nachaufblas-Vorrichtung nach Anspruch 3, dadurch gekennzeichnet, daß die Basis auf einer vertikalen Achse mit der beweglichen Platte drehbar ist, daß die Verriegelung einen Hohlraum (13) mit einer engen, auf den ortsfesten Platte ausgebildeten Öffnung aufweist und daß ein T-förmiger Vorsprung (16) auf der beweglichen Platte so ausgebildet ist, daß er in den Hohlraum greift und durch Drehen der beweglichen Platte mit diesem Hohlraum in Eingriff kommt.

5. Nachaufblas-Vorrichtung nach Anspruch 4, dadurch gekennzeichnet, daß die bewegliche Platte eine auf der gegenüberliegenden Seite des T-förmigen Vorsprungs befindliche Rille (23) besitzt und daß die Basis einen Zahn (24) aufweist, um mit der Rille in Eingriff zu kommen.

6. Nachaufblas-Vorrichtung nach Anspruch 2 oder einem der vorstehenden Ansprüche 3 bis 5 als Unteranspruch von Anspruch 2, dadurch gekennzeichnet, daß die Entladeeinrichtung über ein Loch (21) verfügt, dessen Durchmesser größer ist als der Aussendurchmesser der beweglichen Platte, jedoch kleiner ist als der Aussendurchmesser eines Reifens, wobei die bewegliche Platte durch das Loch (hindurch) bewegt und mit einem Reifen in Eingriff gebracht werden kann.

## Revendications

1. Un apres-gonflage utiliable avec un pneu vulcanise et adapte pour recevoir use serie de pneu vulcanise chauffe (T) du vulcanisateur (A), ledit gonflage (C) comprenant une tige rotative horizontale substantielle (10), et une pluralite d'unites (11) montees sur ladite tige a des locations espacees inclinees, chacune des dites unites comprenant une plaque (12) a bourrelet fixe qui est fixe sur ladite tige et la plaque a bourrelet deplacable (15), les dites plaques fixes at bougeables etant interchangeables ensemble et adaptees pour enclencher les 2 bourrelets du pneu pour former un espace scelle a l'interieur un pneu, ladite tige etant rotative si bien que les unites maintenant le pneu sont successivement situes dans la poistion la plus basse, characterisee en cela par ladite tige horizontale rotative (10) qui est supportee parallelement a la direction du deplacement transportation des pneus a partir di dit vulcanizateur, et une base (17) qui n'est pas rotative avec la tige qui est supportee en-dessous de ladite tige de ladite position la plus basse est verticallement inversee relativement a ladite tige, ladite base (17) etant enclenchable avec le bourrelet de la plaque bougeable (15) de l'unite de maintient du pneu lorsque ladite unite est dans ladite position la plus basse au mouvement vertical du dit bourrelet de la plaque bougeable vers et loin du bourrelet de ladite plaque fixe (10).

2. Un apres-gonflage qui suivant la Revendication 1, inclus en plus un pneu decharge (20) monte sur un endroit fixe relatif a ladite tige, ledit dechargeur etant place en-dessous de ladite plaque fixe de l'unite maintenant la pneu a ladite position la plus basse, ledit dechargeur etant adapte pour supporter un pneu chauffe en-dessous de ladite position la plus basse.

3. Un apres-gonflage qui suivant la Revendication 1 ou 2 dans lesquelles lesdites plaques fixes et bougeables de chaque unite possedent des moyens de verrouillange (13, 14, 16) qui sont interchangeables par rotation de ladite plaque bougeable, et ladite base comprenant les moyens (19) pour las rotation de ladite plaque bougeable.

4. Un apres-gonflage qui suivant la Revendication 3, dans lequelle ladite base est rotative sur axe vertical avec lequel ladite plaque bougeable; les dits moyens de verrouillage comprenant une cavite (13) avec une ouverture etroite (14) formee sur ladite plaque fixe et une projection en forme de T (16) sur ladite plaque bougeable adaptee pour entrer dans ladite cavite et s'enclencher avec ladite cavite par ladite rotation de ladite plaque bougeable.

5. Un apres-gonflage qui suivant la Revendication 4, dans lequelle ladite plaque bougeable possede une rainure (23) sur le cote oppose a ladite projection en forme de T, et ladite base possede une dent (24) pour l'enclenchement avec ladite rainure.

6. Un apres-gonflage comme dans la Revendication 2 ou chacunes des Revendications 3 a 5 lorsqu'elles dependent de la Revendication 2 dans lequelle ledit dechargeur possede un trou (21) d'un diametre superieur au diametre exterieur de ladite plaque bougeable, mais de diametre inferieur a celui du pneu externe, ladite plaque bougeable etant deplacable par ledit trou et enclenchable avec un pneu.

## Fig. 1.

PRIOR ART

VULCANIZER    A

T

8    a

3    B

4    5    5a    T    6a    6

7    I    7

4    6    6    T    5

EP 0 143 538 B1

FIG.3

FIG.4

2

FIG. 5a.

(b)

(C)

FIG. 5d.

(e)